# FASCICULE DE BREVET EUROPEEN

(11) **EP 0 818 763 B1**
(45) Date de publication et mention de la délivrance du brevet: **24.10.2001**
(21) Numéro de dépôt: 97401646.1
(22) Date de dépôt: 09.07.1997
(51) Int. Cl.: G07F 7/10

(54) **Procédé de contrôle de transactions sécurisées independantes utilisant un dispositif physique unique**
Verfahren zum Kontrollieren von unabhängigen gesicherten Transaktionen mit einer einzigen physischen Vorrichtung
Method for controlling secure independant transactions, using a unique physical device

(30) Priorité: 11.07.1996 FR 9608692
(43) Date de publication de la demande: 14.01.1998
(73) Titulaire: FRANCE TELECOM, 75015 Paris (FR)
(72) Inventeur: Stoffel, Laurent, 92130 Issy-Les-Moulineaux (FR); Arditti, David, 92140 Clamart (FR); Campana, Mireille, 92140 Clamart (FR)
(74) Mandataire: Dubois-Chabert, Guy

(56) Documents cités:
- EP-A- 0 089 876
- EP-A- 0 114 773
- EP-A- 0 385 290
- EP-A- 0 409 701
- EP-A- 0 671 712
- WO-A-95/22810
- FR-A- 2 616 940
- US-A- 4 700 055

## Description

### Domaine technique

La présente invention concerne un procédé de contrôle de transactions sécurisées indépendantes utilisant un dispositif physique unique.

### Etat de la technique antérieure

Dans les systèmes de l'art antérieur utilisant des transactions sécurisées (métro, banques, informatique, téléphone, mais aussi garages, parcmètres, cantines, ...), on utilise divers dispositifs (cartes, jetons, code secret) afin de reconnaître les utilisateurs avant de leur fournir des services facturés. Généralement chaque type de système utilise son propre dispositif, qui peut être passif (par exemple carte à trous, carte orange) ou actif (par exemple carte à microprocesseur, calculette).

Ainsi, les cartes multidomaines du type carte MCOS de Gemplus ou TB100 de Bull sont des cartes à microprocesseur comprenant plusieurs registres indépendants, chacun de ces registres se comportant comme une carte. On peut alors utiliser plusieurs applications indépendantes sur une même carte, l'étanchéité entre ces applications étant garantie.

Divers systèmes ont tenté de créer des supports multiprestataires, un dispositif physique étant associé à plusieurs services (par exemple une carte multiprestataires permettant dans un réseau câblé l'accès à plusieurs chaînes concurrentes), ou d'utiliser le support d'un autre prestataire (par exemple carte bancaire dans les Publiphones). Les fabricants de carte ont défini des cartes multidomaines pouvant être gérées de façon étanche par plusieurs prestataires. Néanmoins, pour des raisons de politique de propriété du support, ces tentatives ont peu vu le jour (exigences de modifier le matériel des Publiphones par les banquiers), ou ont été vouées à l'échec ; aussi chacun dispose-t-il toujours actuellement d'une carte bancaire, d'une carte France Telecom, d'un badge d'entreprise, d'une carte de parking, ....

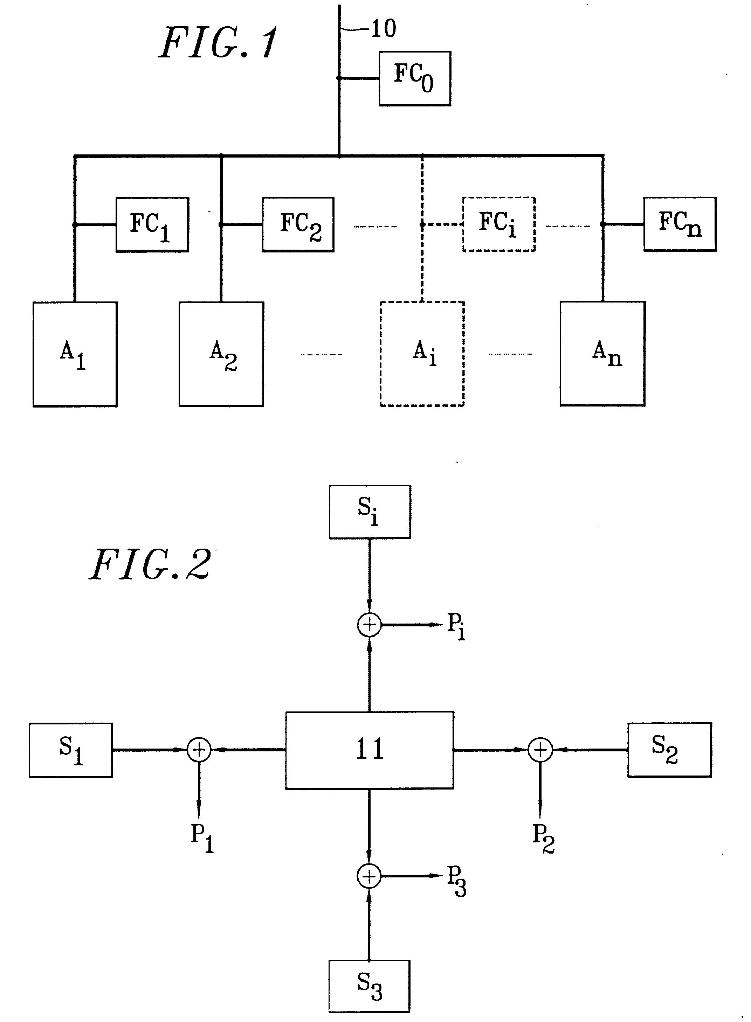

Ainsi, le dispositif illustré à la figure 1 qui comporte une branche principale 10 et plusieurs applications A₁, A₂, ... Aₙ, par exemple France Telecom, Carte bleue, Santé,... n'a jamais vu le jour car il est impossible d'obtenir un consensus pour le choix d'un coordonnateur qui gère la carte au niveau le plus élevé. Sur cette figure, chaque application aurait son propre fichier de clés FC qui permet une gestion en local, indépendamment des autres.

Par ailleurs, la nécessité de rentrer une application dans une carte à microprocesseur supposant une phase de personnalisation de la carte, qui est généralement une opération physique, un utilisateur peut ne pas être très confiant pour confier sa carte bancaire, par exemple, à un prestataire pour une opération de ce type.

La demande de brevet FR-A-2 616 940 concerne une carte magnétique à mémoire programmable propre à un porteur déterminé et permettant à celui-ci d'effectuer des opérations déterminées avec un fournisseur. Sur cette carte sont enregistrées des informations de description du porteur, des informations d'identification et d'authentification de celui-ci et des informations de mise en relation du porteur et du fournisseur pour effectuer les opérations déterminées. Ces informations peuvent être lues par un moyen de lecture et de mise en oeuvre d'opérations. Cette carte magnétique permet de mettre le porteur en relation avec plusieurs fournisseurs, les informations de mise en relation du porteur et des fournisseurs étant rassemblées dans une zone de service divisée en sous-zones correspondant chacune à un fournisseur déterminé.

Le brevet US-A-4 700 055 décrit un système de carte de crédit multiple, qui comprend :
- une carte de crédit capable de stocker un ensemble de données numériques lisibles par machine,
- un lecteur de carte,
- un système de vérification pour déterminer la validité d'une transaction proposée avec au moins l'un des comptes stockés sur la carte de crédit,
- des moyens pour imprimer un envoi,
- une console pour commander le lecteur de carte, le système de vérification, et les moyens d'impression, cette console étant connectée à un microprocesseur pour analyser les données sur la carte et pour commander l'impression de l'envoi.

La présente invention a pour objet un procédé permettant d'offrir un dispositif d'authentification unique à tous les prestataires.

### Exposé de l'invention

La présente invention propose un procédé de contrôle de transactions sécurisée tel que defini dans la revendication indépendante 1.

Avantageusement, le procédé de l'invention comprend les étapes suivantes :
- cet utilisateur se procure ledit dispositif physique,
- sur présentation par cet utilisateur de ce dispositif à un prestataire, celui-ci lui délivre un fichier de droits qui contient le profil de cet utilisateur, son identité et sa clé publique,
- le profil de l'utilisateur pour un service donné est certifié par le prestataire,
- lors d'une demande d'accès à un service, l'utilisateur envoie son profil certifié au prestataire,
- le prestataire vérifie alors le certificat à l'aide de sa clé publique et retrouve la clé publique de l'utilisateur,
- le prestataire vérifie que l'utilisateur dispose bien du dispositif.

Avantageusement, le prestataire vérifie que l'utilisateur dispose bien du dispositif physique en lui demandant de signer un aléa avec sa clé secrète contenue dans le dispositif.

Dans un premier exemple de réalisation, le procédé de l'invention comporte les étapes suivantes :
- l'utilisateur se procure une carte à mémoire à clé publique. Cette carte contient un algorithme de signature à clé publique et un couple (clé secrète Kus, clé publique Kup) ;
- l'utilisateur entre en contact avec un prestataire fournissant un service auquel il désire souscrire. Il indique son identité, ou celle-ci peut également être déterminée par le prestataire lui-même. Il fournit la clé publique Kup et son dispositif, le tout par un moyen permettant au prestataire de bien l'identifier ;
- le prestataire remet au client un fichier informatique contenant son profil et la signature de ce profil (Kp (droit, identité, Kup)) établie avec la clé secrète Kps du prestataire, cette signature étant appelée certificat ;
- l'utilisateur demande l'accès au service. Il envoie son profil avec le certificat ;
- le prestataire vérifie le certificat avec sa clé publique Kpp et dispose donc de la clé publique de l'utilisateur Kup. Il met en route une phase d'authentification active :
   - Le prestataire envoie au client un nombre non reproductible A,
   - Le client signe R et envoie Kus (R),
   - Le prestataire utilise la clé publique de l'utilisateur Kup qui lui a été fournie dans le profil pour vérifier que la valeur Kus(R) est exacte, et donc que l'utilisateur dispose bien de Kus.
- si toutes les vérifications sont correctes, le prestataire accorde le service considéré à l'utilisateur.

Dans un deuxième exemple de réalisation, le procédé de l'invention s'applique à la protection d'un logiciel sous licence, le dispositif étant relié physiquement à la machine, dans laquelle est mis en oeuvre le logiciel. Ce logiciel contient une phase d'initialisation obligatoire qui exige de l'utilisateur potentiel la fourniture de son profil. Le fournisseur de logiciel, sur présentation du dispositif, remet à l'utilisateur un fichier profil qui contient ses droits au niveau du logiciel ainsi que des paramètres de type date, le tout certifié et une version du logiciel exécutable. Lorsque l'utilisateur désire utiliser le logiciel, il effectue une requête et le logiciel lui demande son profil, ensuite le logiciel vérifie les droits de l'utilisateur et la date de péremption, lui fait faire une authentification active et s'exécute alors selon le mode prévu.

Contrairement aux systèmes de l'art antérieur, dans le procédé de l'invention le dispositif physique reste non modifié.

Pour accéder à n services, l'utilisateur dispose d'un seul dispositif physique et de n supports dématérialisés (type fichier informatique ou numéro papier). L'utilisateur n'a plus besoin de détenir et d'acheter un grand nombre de dispositifs. Par ailleurs, le dispositif unique peut être choisi parmi ceux offrant une authentification forte, donc permettant une bonne sécurité vis-à-vis des services.

### Brève description des dessins

- la figure 1 illustre un système de l'art connu,
- la figure 2 illustre un système permettant de mettre en oeuvre le procédé de l'invention,
- la figure 3 illustre le fonctionnement du procédé de l'invention.

### Exposé détaillé de modes de réalisation

La présente invention concerne un procédé de contrôle de transactions sécurisées indépendantes utilisant un dispositif physique unique.

Ce dispositif physique peut être, par exemple, une carte à microprocesseur à clé publique, une calculette, un micro-ordinateur. Il peut être commercialisé de façon indépendante par un vendeur quelconque.

Ce dispositif est un dispositif à clé publique, renfermant par exemple l'algorithme RSA (voir référence [1] donnée en fin de description). Il contient une clé secrète unique Kus et la clé publique associée Kup qui vont devenir la paire des clés de l'utilisateur.

Le fichier de droits, qui contient le profil de l'utilisateur, c'est-à-dire la description de ses droits (qui jusqu'alors étaient renfermés dans le dispositif), son identité id et sa clé publique Kup, lui est décerné par un prestataire de service sur présentation de son dispositif.

Seul ce fichier fait le lien entre le dispositif physique et l'identité de l'utilisateur se rapportant à un service donné. Celle-ci peut donc différer d'un service à l'autre et être choisie par le prestataire, car l'identité peut être un numéro par exemple de carte France Telecom, de compte bancaire, ou de téléphone.

Le profil de l'utilisateur pour un service donné, donc pour un prestataire donné, est certifié (signé avec la clé secrète) par le prestataire qui dispose d'un couple propre (clé secrète, clé publique).

Lors d'une demande d'accès au service considéré, l'utilisateur envoie son profil certifié au prestataire. Celui-ci vérifie le certificat, à l'aide de sa clé publique et retrouve la clé publique de l'utilisateur. Il vérifie ensuite que l'utilisateur dispose bien du dispositif en lui demandant par exemple de signer un aléa avec sa clé secrète contenue dans le dispositif.

Un système permettant de mettre en oeuvre le procédé de l'invention, illustré sur la figure 2, comprend un dispositif physique indépendant 11 propriété de l'utilisateur qui peut recevoir des données de différents prestataires extérieurs P₁, P₂, P₃, Pᵢ...par exemple bancaire, France Telecom, Santé,...

L'ensemble dispositif physique+Données permet de réaliser une transaction sûre avec le serveur correspondant aux données : S₁, S₂, S₃ ou Sᵢ....

Dans le procédé de communication, l'utilisateur demande un accès à un service donné après envoi de données (certificat non confidentiel). Le prestataire répond alors en utilisant des données qui lui sont propres.

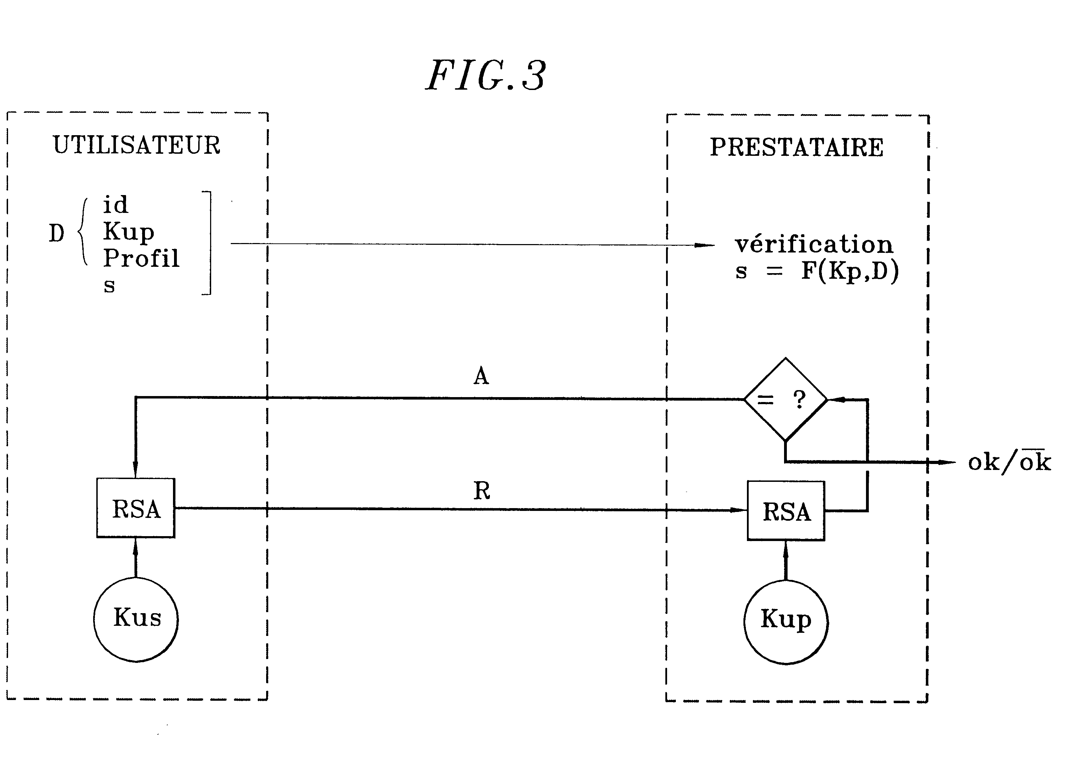

Comme illustré sur la figure 3, lors d'une demande d'accès à un service :
- l'utilisateur envoie son profil certifié au prestataire, avec
   - des données D :
      id : identité de l'utilisateur,
      Kup : clé publique
      Profil
   - et un certificat s tel que s=F(Kp,D) donné par le prestataire à l'utilisateur lors de l'inscription de celui-ci ; Kp étant secret et à la disposition du prestataire.
- le prestataire vérifie alors le certificat s : s=F(Kp, D). Il déduit la clé d'authentification en utilisant des données qui lui sont propres,
- le prestataire envoie une demande d'authentification,
- l'utilisateur utilise le dispositif physique pour répondre,
- le prestataire vérifie cette réponse pour accorder ou non le service demandé.

Sur la figure 3 cette authentification est réalisée en utilisant l'algorithme RSA.
- Le prestataire envoie un nombre A,
- Le dispositif physique calcule R=RSA(Kus,A), Kus étant une clé secrète contenue dans ledit dispositif.
- Le prestataire calcule RSA(Kup,R) qui doit être égal à A.
- Il vérifie alors l'égalité pour accepter ou refuser d'accorder le service concerné à l'utilisateur.

Contrairement aux systèmes de l'art antérieur, dans lesquels lorsqu'un utilisateur souscrit à un service utilisant un procédé d'authentification active, le prestataire fournit un dispositif physique (carte France Telecom, SIM pour le GSM, carte orange personnalisée, ...) renfermant les droits, l'invention permet de dissocier physiquement les droits du dispositif d'authentification et de les placer dans un support banal (fichier informatique, numéro, ...).

Dans un premier exemple de réalisation, le procédé de l'invention comporte les étapes suivantes :

### Achat d'un support

L'utilisateur se procure une carte à mémoire à clé publique, par exemple achète celle-ci chez un revendeur de son choix. Cette carte contient un algorithme de signature à clé publique et un couple (clé secrète Kus, clé publique Kup). La clé publique Kup est accessible à l'extérieur, soit dans un champ en lecture libre, soit inscrite physiquement sur la carte.

### Souscription à un service

L'utilisateur entre en contact avec un prestataire fournissant un service auquel il désire souscrire. Il indique son identité, qui peut également être déterminée par le prestataire lui-même, et fournit la clé publique Kup de son dispositif, le tout par un moyen permettant au prestataire de bien l'identifier. Le prestataire remet au client un fichier informatique contenant son profil et la signature de ce profil (Kp (droit, identité, Kup)) établie avec la clé secrète Kps du prestataire ; cette signature étant appelée certificat.

### Accès au service

L'utilisateur demande l'accès au service. Il envoie son profil avec le certificat. Le prestataire vérifie le certificat avec sa clé publique Kpp et dispose donc de la clé publique de l'utilisateur Kup. Il met en route une phase d'authentification active :
- Le prestataire envoie au client un nombre non reproductible A;
- Le client signe R et envoie Kus(R) ;
- Le prestataire utilise la clé publique de l'utilisateur Kup qui lui a été fournie dans le profil pour vérifier Kus(R), et donc que l'utilisateur dispose bien de Kus.

Si toutes les vérifications sont correctes, le prestataire accorde le service considéré à l'utilisateur.

Dans un second exemple de réalisation, le procédé de l'invention s'applique à la protection d'un logiciel sous licence (il est alors nécessaire que le dispositif soit relié physiquement à la machine de type dongle, ou carte dans un lecteur) et que le logiciel puisse vérifier sa présence).

Dans cette utilisation, un vendeur cherche à vendre une licence d'un logiciel lui appartenant. Ce logiciel contient une phase d'initialisation obligatoire qui exige de l'utilisateur potentiel la fourniture de ce profil.

Comme dans la première application, l'utilisateur dispose d'un dispositif physique unique.

Le vendeur de logiciel, sur présentation du dispositif, lui remet un fichier profil qui contient ses droits au niveau du logiciel ainsi que des paramètres de type date, le tout étant certifié et une version du logiciel exécutable.

Lorsque l'utilisateur désire utiliser le logiciel, il effectue une requête et le logiciel lui demande son profil. Ensuite le logiciel vérifie les droits de l'utilisateur et la date de péremption, lui fait faire une authentification active et s'exécute selon le mode prévu.

En cas de recopie frauduleuse du logiciel, le tricheur peut également recopier le fichier profil, mais il lui est nécessaire de détenir le dispositif physique d'authentification pour passer la phase d'authentification active qui est différente à chaque étape. Le logiciel ne peut donc s'exécuter que dans un seul endroit à la fois.

### REFERENCE

[1] "Applied Cryptography" de Bruce Schneier (John Wiley et Sons, seconde édition, chapitre 19).

## Revendications

1. Procédé de contrôle de transactions sécurisées indépendantes utilisant un dispositif physique unique (11), contenant un algorithme de signature à clé publique et un couple: clé secrète Kus, clé publique Kup, ledit dispositif étant la propriété d'un utilisateur, le procédé comportant les étapes suivantes:
- cet utilisateur se procure ledit dispositif physique indépendamment de tout prestataire,
- cet utilisateur entre en contact avec au moins un prestataire (P1, P2, P3) fournissant un service déterminé (S1, S2, S3) auquel il désire souscrire, et lui présente son dispositif physique,
le procédé étant **caracterisé en ce que** :
- ce prestataire délivre à cet utilisateur un ensemble de données caractérisant cet utilisateur associé à ce dispositif, pour un accès à ce service déterminé (Si, S2, S3), ces données étant stockées sur un support différent du dispositif, qui ainsi n'est pas modifié,
- l'ensemble constitué par le dispositif physique et par ces données associées permet de réaliser une transaction sûre avec ce service (S1, S2, S3).

2. Procédé selon la revendication 1,
**caractérisé en ce qu'**il comprend les étapes suivantes :
- cet utilisateur se procure ledit dispositif physique,
- sur présentation par cet utilisateur de ce dispositif à un prestataire, celui-ci lui délivre un fichier de droits qui contient le profil de cet utilisateur, son identité et sa clé publique ;
- le profil de l'utilisateur pour un service donné est certifié par le prestataire,
- lors d'une demande d'accès à un service, l'utilisateur envoie son profil certifié au prestataire,
- le prestataire vérifie alors le certificat à l'aide de sa clé publique et retrouve la clé publique de l'utilisateur,
- le prestataire vérifie que l'utilisateur dispose bien du dispositif.

3. Procédé selon la revendication 2,
**caractérisé en ce que** le prestataire vérifie que l'utilisateur dispose bien du dispositif physique en lui demandant de signer un aléa avec sa clé secrète contenue dans le dispositif.

4. Procédé selon la revendication 1,
**caractérisé en ce qu'**il comporte les étapes suivantes :
- l'utilisateur se procure une carte à mémoire à clé publique, qui contient un algorithme de signature à clé publique et un couple (clé secrète Kus, clé publique Kup) ;
- l'utilisateur entre en contact avec un prestataire fournissant un service auquel il désire souscrire ; il fournit la clé publique Kup et son dispositif ;
- le prestataire remet au client un fichier informatique contenant son profil et la signature de ce profil (Ks (droit, identité, Kup)) établie avec la clé secrète Ks du prestataire, cette signature étant appelée certificat ;
- l'utilisateur demande l'accès au service ; il envoie son profil avec le certificat ;
- le prestataire vérifie le certificat avec sa clé publique Kp et dispose donc de la clé publique de l'utilisateur Kup ; il met en route une phase d'authentification active :
• Le prestataire envoie au client un nombre non reproductible R,
• Le client signe R et envoie Kus (R),
• Le prestataire utilise la clé publique de l'utilisateur Kup qui lui a été fournie dans le profil pour vérifier que la valeur Kus(R) est exacte, et donc que l'utilisateur dispose bien de Kus.
- Si toutes les vérifications sont correctes, le prestataire accorde le service considéré à l'utilisateur.

5. Procédé selon la revendication 1,
**caractérisé en ce qu'**il s'applique à la protection d'un logiciel sous licence, **en ce que** le dispositif est relié physiquement à la machine dans laquelle est mis en oeuvre le logiciel, **en ce que** le logiciel contient une phase d'initialisation obligatoire qui exige de l'utilisateur potentiel la fourniture de son profil, **en ce que** le fournisseur de logiciel, sur présentation du dispositif, remet à l'utilisateur un fichier profil qui contient ses droits au niveau du logiciel ainsi que des paramètres de type date, le tout étant certifié et une version du logiciel exécutable, **en ce que** lorsque l'utilisateur désire utiliser le logiciel, il effectue une requête, **en ce que** le logiciel lui demande alors son profil, et vérifie ses droits et la date de péremption, et s'exécute alors selon le mode prévu.

## Patentansprüche

1. Verfahren zum Kontrollieren von unabhängigen gesicherten Transaktionen mit einer einzigen physischen Vorrichtung (11), die einen Signatur-Algorithmus mit öffentlichem Schlüssel enthält und ein Paar: geheimer Schlüssel Kus, öffentlicher Schlüssel Kup, wobei die genannte Vorrichtung das Eigentum eines Benutzers ist und das Verfahren die folgenden Schritte umfasst:
- dieser Benutzer beschafft sich die genannte physische Vorrichtung unabhängig von jedem Leistungserbringer,
- dieser Benutzer tritt in Kontakt mit wenigstens einem eine bestimmte Dienstleistung (S1, S2, S3) liefernden Leistungserbringer (P1, P2, P3), die er zu subskribieren wünscht, und präsentiert ihm seine physische Vorrichtung,
wobei dieses Verfahren **dadurch gekennzeichnet ist, dass**:
- dieser Leistungserbringer diesem Benutzer eine Datenmenge liefert, die diesen Benutzer in Verbindung mit dieser Vorrichtung für einen Zugang zu dieser bestimmten Dienstleistung (S1, S2, S3) charakterisiert, wobei diese Daten auf einem anderen Träger als der Vorrichtung gespeichert werden, die also nicht modifiziert wird,
- das durch die physische Vorrichtung und durch diese zugeordneten Daten gebildete Ganze ermöglicht, mit dieser Dienstleistung (S1, S2, S3) eine sichere Transaktion zu bilden.

2. Verfahren nach Anspruch 1, **dadurch gekennzeichnet, dass** es die folgenden Schritte umfasst:
- dieser Benutzer beschafft sich diese Vorrichtung,
- bei Präsentation dieser Vorrichtung bei einem Leistungserbringer durch diesen Benutzer liefert dieser eine Datei von Rechten bzw. Berechtigungen, die das Profil dieses Benutzers, seine Identität und seinen öffentlichen Schlüssel enthält;
- das Benutzerprofil für eine bestimmte Dienstleistung wird durch den Leistungserbringer zertifiziert;
- bei einer Bitte um Zugang zu einer Dienstleistung sendet der Benutzer dem Leistungserbringer sein zertifiziertes Profil,
- der Leistungserbringer verifiziert dann das Zertifikat mit Hilfe seines öffentlichen Schlüssels und findet wieder den öffentlichen Schlüssel des Benutzers,
- der Leistungserbringer verifiziert, dass der Benutzer tatsächlich über die Vorrichtung verfügt.

3. Verfahren nach Anspruch 2, **dadurch gekennzeichnet, dass** der Leistungserbringer verifiziert, dass der Benutzer tatsächlich über die physische Vorrichtung verfügt, indem er ihn ersucht, einen Zufall bzw. eine Zufallszahl mit seinem in seiner Vorrichtung enthaltenen geheimen Schlüssel zu signieren.

4. Verfahren nach Anspruch 1, **dadurch gekennzeichnet, dass** es die folgenden Schritte umfasst:
- der Benutzer beschafft sich eine Speicherkarte mit öffentlichem Schlüssel, die einen Signatur-Algorithmus mit öffentlichem Schlüssel und ein Paar (geheimer Schlüssel Kus, öffentlicher Schlüssel Kup) enthält.
- der Benutzer tritt in Kontakt mit einem eine Dienstleistung liefernden Leistungserbringer, die er zu subskribieren wünscht; er präsentiert den öffentlichen Schlüssel Kup und seine Vorrichtung;
- der Leistungserbringer liefert dem Benutzer eine Informatikdatei, die dessen Profil und die Signatur dieses Profils enthält (Ks (Berechtigung, Identität, Kup)), erstellt mit dem geheimen Schlüssel des Leistungserbringers, wobei diese Signatur Zertifikat genannt wird;
- der Benutzer bittet um Zugang zu der Dienstleistung: er sendet sein Profil mit dem Zertifikat;
- der Leistungserbringer verifiziert das Zertifikat mit seinem öffentlichen Schlüssel Kp und verfügt folglich über den öffentlichen Schlüssel Kup des Benutzers; er leitet eine Phase aktiver Authentifizierung ein:
• der Leistungserbringer sendet dem Kunden eine nichtreproduzierbare Zahl R,
• der Kunde signiert R und sendet Kus (R),
• der Leistungserbringer benützt den öffentlichen Schlüssel Kup des Benutzers, der ihm in dem Profil geliefert wurde, um zu verifizieren, dass der Wert Kus(R) exakt ist und der Benutzer folglich tatsächlich über Kus verfügt.
- wenn alle Verifizierungen korrekt sind, bewilligt der Leistungserbringer dem Benutzer die betreffende Dienstleistung.

5. Verfahren nach Anspruch 1, **dadurch gekennzeichnet, dass** es zum Schutze einer lizenzierten Software angewandt wird, **dass** die Vorrichtung physisch mit der Maschine verbunden ist, in der die Software benutzt wird, **dass** die Software eine obligatorische Initialisierungsphase umfasst, die von dem potentiellen Benutzer die Lieferung seines Profils verlangt, dass der Lieferant der Software bei Präsentation der Vorrichtung dem Benutzer eine Profildatei übergibt, die seine Rechte bezüglich der Software sowie Parameter des Datumstyps enthalten, wobei das Ganze zertifiziert und eine ausführbare Version der Software ist, **dass** dann, wenn der Benutzer die Software verwenden will, er einen Antrag stellt, **dass** die Software ihn dann um sein Profil und seine Rechte und das Freigabedatum bittet, seine Rechte und das Freigabedatum verifiziert und dann sich nach dem vorgesehenen Modus ausführt bzw. ausgeführt werden kann.

## Claims

1. Method for controlling independent secure transactions using a single physical apparatus (11) containing a public code signature algorithm and a pair: secret code Kus, public code Kup, said apparatus being the property of one user, the method comprising the following stages:
- said user acquires said physical apparatus independently of any provider,
- said user enters into contact with at least one provider (P1, P2; P3) supplying a given service (S1, S2, S3) to which he wishes to subscribe and presents to him his physical apparatus,
said method being **characterized in that**:
- said provider delivers to said user data characterizing said user associated with said apparatus for an access to said given service (S1, S2, S3), said data being stored on a support differing from the apparatus, which is consequently not modified,
- the assembly constituted by the physical apparatus and by the associated data makes it possible to implement a reliable transaction with said service (S1, S2, S3).

2. Method according to claim 1, **characterized in that** it comprises the following stages:
- said user acquires said physical apparatus,
- on presentation by the user of said apparatus to a provider, the latter provides an access file containing the profile, the identity and public code of said user,
- the profile of the user for a given service is certified by the provider,
- during an access request to a service, the user supplies his certified profile to the provider,
- the provider then checks the certificate with the aid of its public code and finds the public code of the user,
- the provider checks that the user does have the apparatus.

3. Method according to claim 2, **characterized in that** the provider checks that the user does have the physical apparatus by asking him to sign a random number with its secret code contained in the apparatus.

4. Method according to claim 1, **characterized in that** it comprises the following stages:
- the user obtains a public code smart card containing a public code signature algorithm and a pair (secret code Kus, public code Kup),
- the user enters into contact with a provider supplying a service to which he wishes to subscribe and supplies the public code Kup and his apparatus,
- the provider supplies the client with a computer file containing his profile and the signature of said profile (Ks (right, identity, Kup)) established with the secret code Ks of the provider, said signature being called a certificate,
- the user requests access to the service and sends his profile with the certificate,
- the provider checks the certificate with the public code Kp and consequently has the public code of the user Kup and starts up an active authentification phase:
the provider sends the client a non-reproducible number R,
the client signs R and sends Kus (R),
the provider uses the public code of the user Kup supplied to him
in the profile for checking that the value Kus(R) is correct and
consequently that the user does have Kus,
- if all the checks are correct, the provider grants the considered service to the user.

5. Method according to claim 1, **characterized in that** it is applied to the protection of licensed software, **in that** the apparatus is physically connected to the machine in which the software is to be used, **in that** the software contains an obligatory initialization phase requiring the potential user to supply his profile, **in that** the software supplier, on presentation of the apparatus, returns to the user a profile file containing his rights with respect to the software and parameters of the date type, everything being certified and executable software version, **in that** when the user wishes to use the software he makes a request and **in that** the software then requests his profile and checks his rights and the expiry date and then runs in the programmed manner.
